# EUROPÄISCHE PATENTANMELDUNG

(11) **EP 4 548 751 A1**
(43) Veröffentlichungstag der Anmeldung: **07.05.2025**
(21) Anmeldenummer: 24210626.8
(22) Anmeldetag: 04.11.2024
(51) Int. Cl.: A01G 9/033, E04D 11/00

(54) **MODUL ZUR BEGRÜNUNG VON DACHFLÄCHEN**

(30) Priorität: 03.11.2023 DE 202023106435 U
(71) Anmelder: Kieslich, Dirk, 58840 Plettenberg (DE)
(72) Erfinder: Kieslich, Dirk, 58840 Plettenberg (DE)
(74) Vertreter: Patentanwälte Dörner & Kötter PartG mbB

(57) **Zusammenfassung**

Die Erfindung betrifft ein Modul zur Begrünung von geneigten Dachflächen, bestehend aus einem Pflanzkasten (3), welcher eine Vegetationsschicht aufnimmt und der einen Boden (4), zwei Längswände (5), eine obere Stirnwand (6) und eine untere Stirnwand (7) aufweist, dadurch gekennzeichnet, dass mindestens eine Stauwand (8) zwischen der oberen Stirnwand (6) und der unteren Stirnwand (7) angeordnet ist, die sich zwischen den Längswänden (5) erstreckt.

## Beschreibung

Die Erfindung betrifft ein Modul zur Begrünung von geneigten Dachflächen, bestehend aus einem Pflanzkasten, welcher eine Vegetationsschicht aufnimmt und der einen Boden, zwei Längswände, eine obere Stirnwand und eine untere Stirnwand aufweist.

Grünpflanzen sind bekanntermaßen in der Lage durch Photosynthese das in der Luft vorhandene CO₂ in Sauerstoff und Energie (Traubenzucker) umzubauen (Oxygene Photosynthese - Bildung von O₂). In Folge dessen ist man bemüht, durch die Erweiterung von Flächen für Grünpflanzen den Anteil an CO₂ in der Luft zu reduzieren. Hierzu geraten auch Fassaden von Gebäuden sowie deren Dächer verstärkt in den Blickpunkt, da diese gerade in Ballungsgebieten umfangreich zur Verfügung stehen. Zudem kann durch umfangreiche Begrünung der Gebäude auch der Erwärmung der Innenstädte entgegengewirkt werden.

Gegenwärtig werden hauptsächlich Dachflächen begrünt, die als Flachdachanlagen ausgeführt sind, insbesondere Dächer von Fabrik- oder Lagerhallen, Bürogebäuden, Garagen und zunehmend auch von Wohngebäuden. Flachdachanlagen eignen sich im Vergleich zu geneigten Dachflächen gut für eine Begrünung, weil zum einen nicht die Gefahr eines Abrutschens der Vegetation besteht und zum anderen Wasser nicht so schnell abfließt, sodass eine bessere und länger andauernde Bewässerung der Vegetation erfolgen kann, als bei geneigten Dachflächen.

Aufgrund der im Bereich der Wohngebäude jedoch sehr weit verbreiteten geneigten Dachflächen besteht verstärkt der Wunsch, auch für solche Dachflächen geeignete Lösungen für eine Begrünung der geneigten Dachflächen anzubieten. Hierfür ist bspw. aus der WO 2011/095799 A1 ein Modul zur Erstellung einer begrünten Dachfläche bekannt, welches über einen Schalenabschnitt zur Aufnahme einer Vegetationsschicht verfügt. Das Modul weist eine Oberkante, eine Unterkante, die sich bei Verwendung auf dem Dach unterhalb der Oberkante befindet, sowie eine erste und eine zweite Seitenkante auf. Das Modul weist einen ersten und einen zweiten länglichen Verriegelungsabschnitt auf, welche jeweils an ihre erste und zweite Seitenkante angrenzen und im Wesentlichen parallel zu den Seitenkanten verlaufen. Die ineinandergreifenden Abschnitte sind so konfiguriert, dass der erste ineinandergreifende Abschnitt eines solchen Moduls vom zweiten Abschnitt eines zweiten solchen Moduls überlappt werden kann und Regenwasser, das zwischen die Fliesen fallen kann, zur Unterkante der Fliesen leitet. Das Modul kann vor seiner Platzierung auf dem Dach mit der Vegetationsschicht befüllt werden.

Eine andere Lösung ist bspw. in der WO 2021/028539 A1 beschrieben. Bei dieser werden herkömmliche Dachziegel aus Beton, Ton oder Metall durch ein Aufsatzpflanzsystem ersetzt. Durch den dabei verwendeten Aufsatzpflanzkasten kann dieser ebenfalls vor dem Verbauen auf der Dachfläche mit einer Vegetationstragschicht befüllt werden. Das aufwändige Aufbringen einer Vegetationstragschicht nach der Anordnung des Systems auf der jeweiligen Dachfläche entfällt daher. Das Decken des jeweiligen Dachs nimmt in Folge dessen nicht mehr Zeit in Anspruch als bei der Verwendung üblicher Dachziegel.

Die bekannten Aufsatzpflanzsysteme zur Begrünung von geneigten Dachflächen erfüllen die gewünschten Anforderungen. Allerdings hat sich gezeigt, dass bei den bekannten Lösungen in montiertem Zustand nicht alle Bereiche der Vegetationstragschicht gleichmäßig bewässert werden, weil das Wasser lediglich in dem am tiefsten liegenden Bereich des Pflanzkastens gestaut wird. Zudem ist im Falle von Starkregenereignissen kein kontrolliertes Ablaufen des Wassers möglich.

Der vorliegenden Erfindung liegt daher unter anderem die Aufgabe zugrunde, ein Modul zur Begrünung von geneigten Dachflächen zu schaffen, bei dem das Wasser gleichmäßiger gestaut wird und insbesondere im Falle von Starkregenereignissen ein kontrolliertes Ablaufen des Wassers möglich ist. Gemäß der Erfindung wird diese Aufgabe mit den Merkmalen des Patentanspruchs 1 gelöst.

Mit der Erfindung ist ein Modul zur Begrünung von geneigten Dachflächen geschaffen, bei dem die Vegetationstragschicht gleichmäßiger bewässert wird. Durch die Stauwände sind mehrere Kammern in dem Pflanzkasten ausgebildet, in denen sich Wasser sammeln kann, wodurch es zu einer gleichmäßigeren Abgabe von Wasser an die Vegetationstragschicht kommt. Gleichzeitig wird in den Kammern Wasser zurückgehalten, wodurch die Vegetation auch in Dürrephasen bewässert wird. Zudem wird durch das Zurückhalten von Wasser die Kanalisation entlastet. Im Ergebnis ist ein kontrolliertes Ablaufen des Wassers auch im Falle von Starkregenereignissen ermöglicht.

In Weiterbildung der Erfindung hat die Stauwand eine geringere Höhe als die Längswände. dadurch ist verhindert, dass sich eine derart große Menge an Wasser anstaut, die zu einem unkontrollierten Überlauf an den Längswänden führen würde.

Vorteilhaft ist die obere Stirnwand mit Staulöchern versehen. Die Staulöcher erhöhen die Kapazität beim Abführen gestauten Wassers an der oberen Stirnwand. Dadurch ist das Risiko eines unkontrollierten Überlaufs nach hinten bzw. oben in das Unterdach bzw. die Unterdachkonstruktion reduziert. Die Staulöcher tragen folglich dazu bei, ein Einlaufen von aufgestautem Wasser unter das benachbarte und höher angeordnete Bauteil zu vermeiden.

In anderer Weiterbildung der Erfindung ist in der oberen Stirnwand ein Schlitz vorgesehen. Auch durch diese Gestaltung lässt sich mehr aufgestautes Wasser abführen. Der Schlitz trägt ebenfalls dazu bei, das Einlaufen von aufgestautem Wasser zwischen den überlappenden Modulen hindurch in das Unterdach bzw. die Unterdachkonstruktion zu vermeiden.

Bevorzugt ist an einer Längswand an dem dem Boden abgewandten freien Ende eine Fläche ausgebildet, die seitlich über den Pflanzkasten auskragt. Die Fläche trägt einerseits zur Stabilität der Längswand bei. Andererseits ragt die Fläche über die Längswand eines benachbarten Moduls und überdeckt daher die Fläche in auf einem Dach montiertem Zustand den Spalt zu dem benachbarten Modul. Dadurch ist einem Eindringen von Wasser sowie Schmutz oder Erde beim Einsäen der Dachbegrünung und auch später im verlegten Zustand auf dem Dach vorgebeugt.

In vorteilhafter Weiterbildung der Erfindung ist die untere Stirnwand an ihrem dem Boden abgewandten Ende mit einer Lippe versehen, die über den Pflanzkasten hinausragt. Die Lippe ragt in auf dem Dach montiertem Zustand über die obere Stirnwand eines benachbart angeordneten Moduls und bewirkt im Falle eines Überlaufs von Wasser ein zuverlässiges Ableiten des Wassers auf ein benachbart angeordnetes und tiefer gelegenes Modul. Die Lippe verhindert auf diese Weise, dass Wasser in den Zwischenraum bzw. Spalt des benachbarten Moduls einläuft.

Andere Ausgestaltungen und Weiterbildungen der Erfindung sind in den übrigen Ansprüchen angegeben. Ausführungsbeispiele der Erfindung sind in der Zeichnung dargestellt und werden nachfolgend im Einzelnen beschrieben. Es zeigen:

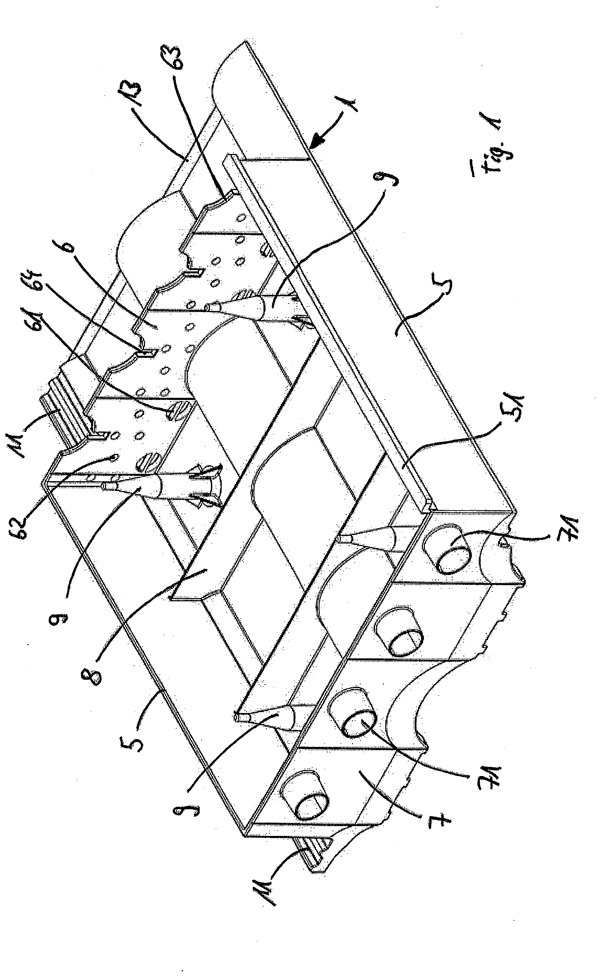

- Figur 1: die perspektivische Darstellung eines erfindungsgemäßen Moduls;

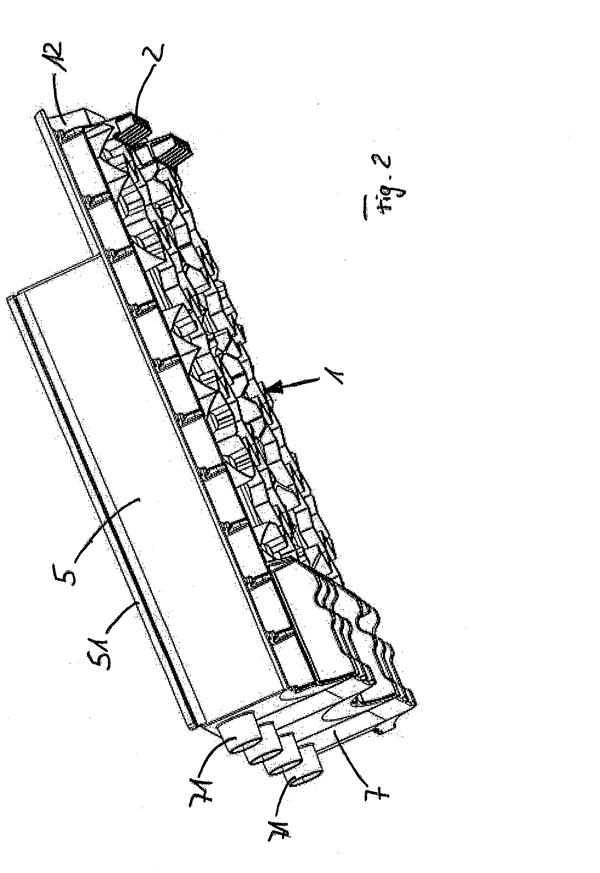

- Figur 2: die perspektivische Darstellung des in Figur 1 dargestellten Moduls unter einem anderen Winkel;

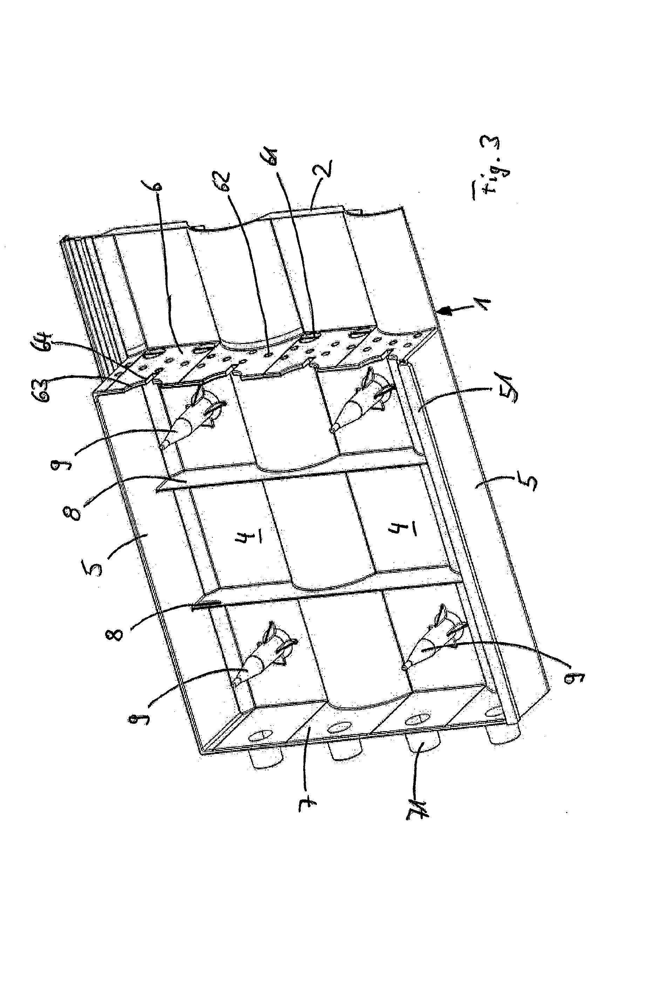

- Figur 3: die perspektivische Darstellung des in Figur 1 dargestellten Moduls unter einem weiterem Winkel;

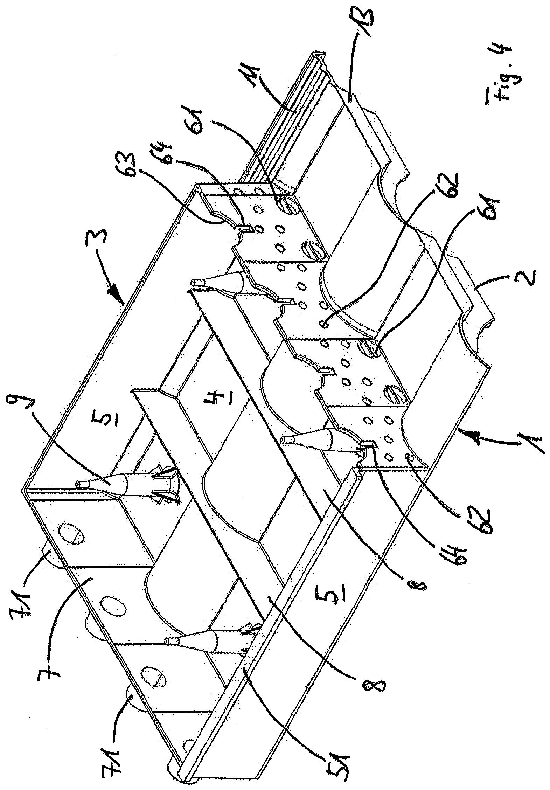

- Figur 4: die perspektivische Darstellung des in Figur 1 dargestellten Moduls unter einem wiederum anderen Winkel;

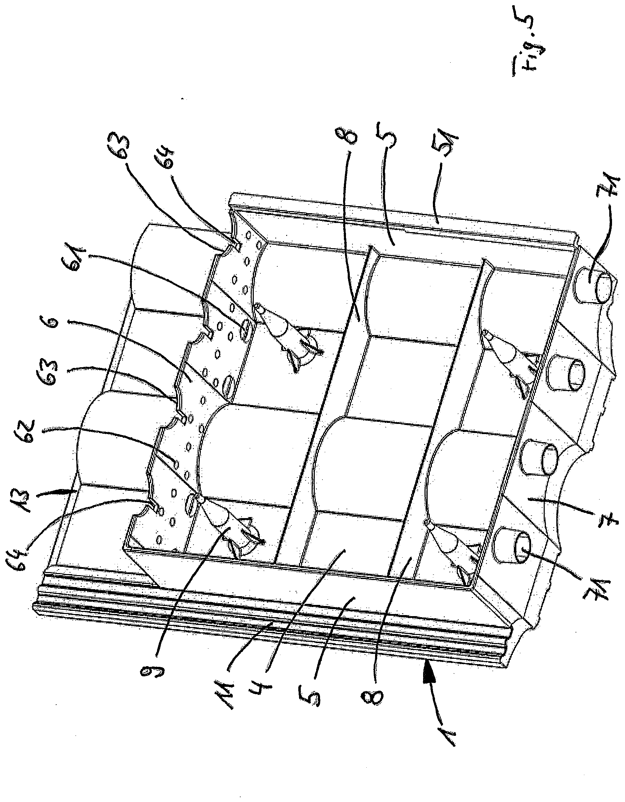

- Figur 5: die perspektivische Darstellung des in Figur 1 dargestellten Moduls unter einem zusätzlichen Winkel;
- Figur 6: die perspektivische Darstellung eines erfindungsgemäßen Moduls in anderer Ausgestaltung;
- Figur 7: die perspektivische Darstellung des in Figur 6 dargestellten Moduls unter einem anderen Winkel;
- Figur 8: die Ansicht der unteren Stirnseite des in Figur 6 dargestellten Moduls.

Das als Ausführungsbeispiel gewählte Modul zur Begrünung von geneigten Dachflächen ist einstückig aus Kunststoff hergestellt, wobei insbesondere UV- und witterungsbeständige Kunststoffe zur Anwendung kommen, um eine lange Lebensdauer zu gewährleisten. Im Ausführungsbeispiel ist dem Kunststoff ein Flammschutzmittel beigemischt. Vorzugsweise kommt hier Blähgraphit zum Einsatz, das in einer Menge von ca. 5% bis 10% zudosiert wird. Das Blähgraphit hat eine aufblähende und damit flammhemmende Wirkung. Andere Flammschutzmittel wie bspw. Halogene, Aluminiumhydroxid (Al(OH)₃), Magnesiumhydroxid (Mg(OH)₂), Ammoniumsulfat ((NH₄)2SO₄) und -phosphat ((NH₄)₃PO₄) können ebenfalls zur Anwendung kommen. Das Modul ist zum Ersatz für herkömmliche Dachpfannen oder Dachziegel vorgesehen.

Das Modul umfasst einen Grundkörper 1, der im Wesentlichen die Geometrie und Abmessung üblicher Dachpfannen bzw. Dachziegel aufweist. An einem Ende des Grundkörpers 1 ist eine Befestigung 2 ausgebildet, welche - wie übliche Dachpfannen bzw. Dachziegel aus Beton, Ton oder Metall - in montiertem Zustand hinter die Traglattung der Dach-Unterkonstruktion fasst. Das Modul besteht ferner aus einem Pflanzkasten 3.

An einer Längsseite des Grundkörpers 1 ist eine Seitenfalz 11 ausgebildet, wie sie von üblichen Dachpfannen bzw. Dachziegeln bekannt ist. Die Seitenfalz 11 ragt über eine Längsseite des Pflanzkastens 3 vor. In auf dem Dach montiertem Zustand ist die Seitenfalz 11 von der benachbarten Dachpfanne, dem Dachziegel oder dem Modul eines Pflanzsystems überdeckt. Auch können an der Falz in bekannter Weise Sturmklammern ansetzen, die das Abheben bei starkem Windsog verhindern und die so eine höhere Sicherheit gewährleisten.

Im Vergleich zu üblichen Dachpfannen oder Dachziegeln ist der Grundkörper 1 mit einer Bauteilverlängerung 12 versehen, so dass der Grundkörper über die Befestigung 2 hinausragt. Die Bauteilverlängerung beträgt im Ausführungsbeispiel ca. 15 mm. Der Grundkörper 1 ragt daher um die Länge der Bauteilverlängerung 12 weiter unter den benachbarten Grundkörper eines Pflanzsystems oder die benachbarte Dachpfannen bzw. den benachbarten Dachziegel.

Am freien Ende der Bauteilverlängerung 12 ist im Ausführungsbeispiel eine Wandung 13 ausgebildet, die rechtwinklig zur Bauteilverlängerung 12 bzw. zum Grundkörper 1 ausgerichtet ist. Die Bauteilverlängerung 12 sowie die Wandung 13 bieten eine verbesserte Dichtigkeit zur Vermeidung von Regenwassereinlauf in das Unterdach bzw. die Unterdachkonstruktion, also unter den benachbarten Grundkörper eines Moduls oder die benachbarte Dachpfanne bzw. den benachbarten Dachziegel.

Der Pflanzkasten 3 nimmt eine nicht dargestellte Vegetationsschicht auf. Bei der Vegetationsschicht handelt es sich vorzugsweise um eine Vegetations- oder Sedummatte. Sie dient zur Begrünung der Dachflächen. Die Matte besteht aus einer Trägerschicht aus Kokosgewebe oder Vlies, auf der in einer aufgebrachten Substratschicht bspw. Sedumpflanzen verwurzelt sind. Sedumpflanzen sind eine Pflanzengattung der Dickblattgewächse. Andere Pflanzenarten können ebenfalls zur Anwendung kommen. Unter der Matte befindet sich üblicherweise eine Schicht aus Granulat.

Alternativ kann anstelle einer Vegetations- oder Sedummatte eine Sedumvegetation mittels Sedumsprossenaussaat auf dem Granulat, bspw. auf einem Gemisch aus z.B. Lava, Blähton, Bims und Organik vorgesehen sein oder es sind direkt in die mit dem Granulat gefüllten Pflanzkästen Sedumpflanzen oder Sedumkleinballenstauden eingepflanzt.

Der Pflanzkasten 3 weist einen Boden 4 auf, der von einem Teil des Grundkörpers 1 gebildet ist und folglich ebenfalls der Kontur einer herkömmlichen Dachpfanne bzw. Dachziegel folgt. Darüber hinaus weist der Pflanzkasten 3 zwei Längswände 5 auf, die parallel zueinander und senkrecht zum Boden 4 ausgerichtet sind.

An der der Seitenfalz 11 abgewandten Längswand 5 ist an dem dem Boden 4 abgewandten freien Ende eine Fläche 51 ausgebildet, die sich im Ausführungsbeispiel über die gesamte Länge der Seitenwand 5 erstreckt. Die Fläche 51 ist rechtwinklig zur Längswand 5 ausgerichtet und kragt seitlich über den Pflanzkasten 3 aus.

Der Pflanzkasten 3 weist des Weiteren eine obere Stirnwand 6 und eine untere Stirnwand 7 auf, die rechtwinklig zum Boden 4 ausgerichtet sind. Die Bezeichnungen als obere und untere Stirnwand sind definiert durch Einbaulage des Moduls auf einer geneigten Dachfläche, bei der die obere Stirnwand 6 höher positioniert ist als die untere Stirnwand 7. Aufgrund der lediglich teilweisen Überdeckung des Grundkörpers 1 durch den Pflanzkasten 3 ragt der Grundkörper 1 abschnittsweise über den Pflanzkasten 3 hervor.

Die obere Stirnwand 6 ist mit Wassereinläufen 61 versehen. Diese sind in der Stirnwand 6 in unmittelbarer Nachbarschaft zum Grundkörper 1 bzw. Boden 4 angeordnet. Sie ermöglichen das Eintreten von Regenwasser in den Pflanzkasten 3. Weiterhin ist die obere Stirnwand 6 mit Staulöchern 62 versehen. Sie dienen ebenfalls dem Eintritt von Wasser in den Pflanzkasten 3, wenn sich Wasser vor der oberen Stirnwand 6 staut.

Darüber hinaus weist die obere Stirnwand 6 an ihrem dem Boden 4 abgewandten Ende in den Ausführungsbeispielen vier Freimachungen 63 auf. In Abwandlung der Ausführungsbeispiele können auch mehr oder weniger Freimachungen vorgesehen sein. Am Grund der Freimachung 63 ist ein Schlitz 64 ausgebildet, der vertikal in Richtung Boden 4 ausgerichtet ist. Sie dienen ebenfalls dem Eintritt von Wasser in den Pflanzkasten 3, wenn sich Wasser vor der oberen Stirnwand 6 so sehr staut, dass ein Überlauf über die obere Stirnwand 6 droht, bspw. bei Starkregenereignissen.

Die untere Stirnwand 7 schließt bündig mit dem Grundkörper 1 ab. Sie ist im Ausführungsbeispiel mit vier Überläufen 71 versehen. Eine andere Anzahl an Überläufen ist in Abwandlung des Ausführungsbeispiels möglich. Die Überläufe 71 sind im Ausführungsbeispiel rohrförmig ausgebildet; andere Geometrien sind ebenfalls möglich. In auf dem Dach montierten Zustand des Pflanzsystems liegen die Überläufe 71 in den Freimachungen 63 der Stirnwand 6 des benachbart angeordneten und tiefer gelegenen Pflanzkastens 3 ein. Es ist so ein kaskadenartiges System geschaffen, bei dem durch die Überläufe 71 abfließendes Wasser in den Pflanzkasten 3 des benachbarten und tiefer angeordneten Moduls abgegeben wird.

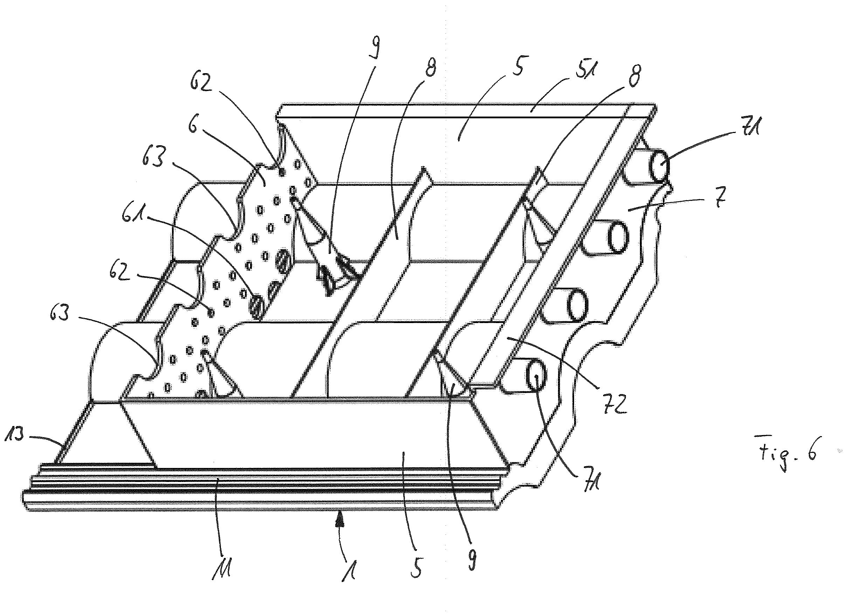

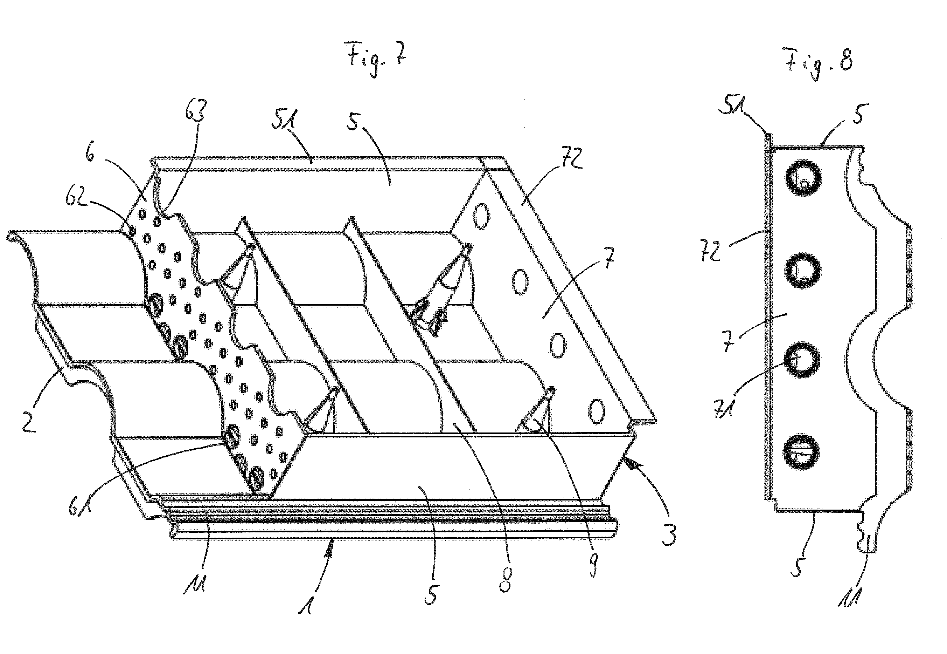

Im Ausführungsbeispiel nach den Figuren 6 bis 8 ist die untere Stirnwand 7 an ihrem dem Boden 4 abgewandten - freien - Ende mit einer Lippe 72 versehen. Die Lippe 72 ist im Ausführungsbeispiel rechtwinklig zur unteren Stirnwand 7 ausgerichtet und ragt über die Stirnwand 7 und damit über den Pflanzkasten 3 in Richtung des benachbart angeordneten und tiefer gelegenen Moduls. Sie erstreckt sich im Ausführungsbeispiel über die gesamte Länge der Stirnwand 7. Die Lippe 72 bewirkt im Falle eines Überlaufs von Wasser ein zuverlässiges Ableiten des Wassers auf das benachbart angeordnete und tiefer gelegene Modul. Die Lippe 72 verhindert, dass Wasser in den Zwischenraum der benachbarten Module einläuft.

Auf dem Boden 4 des Pflanzkastens 3 sind in den Ausführungsbeispielen zwei Stauwände 8 angeordnet, die in den Ausführungsbeispielen parallel zu den Stirnwänden 6 und 7 ausgerichtet sind. In Abwandlung der Ausführungsbeispiele können Stauwände 8 nicht parallel zu den Stirnwänden 6 und 7 ausgerichtet sein. Die Stauwände 8 erstrecken sich im Pflanzkasten 3 zwischen den Längswänden 5 und sind mit diesen verbunden. In Abwandlung der Ausführungsbeispiele können Stauwände 8 auch nicht mit den Längswänden in Kontakt stehen, so dass ein Spalt ausgebildet ist. Die Stauwände 8 sind rechtwinklig zum Boden 4 ausgerichtet und haben eine geringere Höhe als Längswände 5. Durch die Stauwände 8 sind im Ausführungsbespiel drei Kammern in dem Pflanzkasten 3 ausgebildet. In Abwandlung der Ausführungsbeispiele können auch mehr oder weniger Stauwände 8 vorgesehen sein. In den dadurch ausgebildeten Kammern kann sich Wasser sammeln, wodurch es zu einer verzögerten und gleichmäßigeren Abgabe von Wasser an die Vegetationstragschicht kommt. Im Vergleich zum Stand der Technik, bei dem sich in dem geneigt verbauten Pflanzkasten 3 lediglich an der unteren Stirnwand Wasser sammelt, sammelt sich dies nach der Erfindung an den Stauwänden 8 und an der unteren Stirnwand 7. Die Stauwände 8 bilden außerdem Schubsperren, damit unter der Sedummatte befindliches Granulat bzw. die Vegetationsschicht nicht in auf der geneigten Dachfläche montiertem Zustand abrutscht.

Auf dem Boden 4 des Pflanzkastens 3 sind in Ausführungsbeispielen vier Vorsprünge 9 in Form von Domen angeordnet, die im Wesentlichen rechtwinklig zum Boden 5 ausgerichtet sind. Die Dome 9 laufen an ihrem dem Boden 4 abgewandten Ende spitz zu. Durch die Anordnung der Dome erfolgt eine Fixierung der Vegetationsschicht. Damit ist einem Verrutschen der Vegetationsschicht auch bei größeren Neigungswinkeln der Dachfläche vorgebeugt, bspw. wenn die Substratschicht der Vegetationsschicht noch nicht vollständig auf der Trägerschicht angewachsen und verwurzelt ist. Die Vegetationsschicht wird in einfacher Weise beim Bestücken des Pflanzkastens 3 auf die Dome aufgespießt. Durch Anbringen von Klammern an den freien Enden der Dome nach dem Aufspießen ist zudem einem Abheben der Vegetationsschicht durch Wind insbesondere im Bereich des Dachfirstes vorgebeugt.

In Abwandlung der Ausführungsbeispiele können die Vorsprünge 9 einen kreuzförmigen Querschnitt aufweisen. Dieser eignet sich insbesondere für Begrünungen, bei denen nicht eine Vegetationsschicht in Form einer Vegetations- oder Sedummatte zum Einsatz kommt, sondern eine Sedumsprossenaussaat auf dem Granulat ausgebracht ist. Dadurch wird eine Stabilisierung der Vegetationsschicht hervorgerufen, die ein Verrutschen und Stauchen der Schicht verhindert. Durch die Kreuzgeometrie ist eine vergrößerte Fläche der Dome geschaffen, die einen besseren Halt ermöglicht.

Das Modul zur Begrünung von geneigten Dachflächen ist mit herkömmlichen Dachpfannen oder Dachziegeln kombinierbar. In Folge dessen kann es auch in bereits bestehenden Dächern verbaut werden, indem nur einzelne Dachpfannen oder Dachziegel gegen das erfindungsgemäße Modul ausgetauscht werden. Da der Grundkörper 1 im Wesentlichen die Geometrie und Abmessung üblicher Dachpfannen bzw. Dachziegel hat, lässt sich das erfindungsgemäße Modul wie übliche Dachpfannen bzw. Dachziegel auf dem jeweiligen Dach verlegen, und zwar ohne dass Hilfsmittel wie Nägel, Schrauben o. dgl. zur Fixierung auf dem Dach erforderlich sind.

Durch die in dem Pflanzkasten ausgebildeten Kammern erfolgt eine gleichmäßigere Bewässerung der Vegetation, weil sich Wasser an mehr Stellen im Kasten sammelt und nach und nach an die Vegetation abgegeben wird. Je höher die Anzahl an Kammern desto gleichmäßiger erfolgt die Bewässerung. Durch das zurückgehaltene Wasser kann außerdem in Trockenphasen eine Bewässerung der Vegetation erfolgen. Insbesondere bei Starkregenereignissen ist dies vorteilhaft, weil durch die reduzierte Menge an weitergeleitetem Wasser eine Entlastung der Kanalisation erfolgt. Der Spitzenwasser-Abflussbeiwert des erfindungsgemäßen Moduls liegt bei ca. 0,3 bis 0,5, je nachdem, unter welchem Winkel das Modul verbaut ist. Durch die Erhöhung der Anzahl an Kammern kann mehr Wasser zurückgehalten werden.

Zudem ist mit der Erfindung die Sicherheit gegen ein Einlaufen von an der oberen Stirnwand gestautem Wasser unter das darüber angeordnete Bauteil durch die Wandung und die Bauteilverlängerung im Vergleich zu der aus dem Stand der Technik bekannten Lösung erhöht. Durch die Staulöcher und die Schlitze an den Freimachungen in der oberen Stirnwand ist zudem ein verbesserter Ablauf von aufgestautem Wasser geschaffen, der auch zur Vermeidung des Einlaufens von an der oberen Stirnwand gestautem Wasser unter das darüber angeordnete Bauteil in Form einer Dachpfanne, eines Dachziegels, eines Moduls zur Begrünung der Dachfläche o. dgl. beiträgt. Gleichzeitig ist durch die im Verhältnis zu den Seitenwänden 5 geringere Höhe der Stauwände 8 ein unkontrolliertes Überlaufen von aufgestautem Wasser an den Längswänden verhindert, was das Risiko des Eindringens von Wasser in den Spalt zwischen benachbarten Modulen erheblich reduziert.

Zudem ist durch die Fläche 51 an der Längswand 5 sowie durch die Lippe 72 an der unteren Stirnwand 7 ein Schutz gegen das Eintreten von Wasser unter benachbart angeordnete Module geschaffen. Sowohl die Fläche 51 als auch die Lippe 72 überdecken den Spalt zum jeweils benachbarten Modul, wodurch der Eintritt von Wasser in den jeweiligen Spalt verhindert ist.

Insgesamt sind bei dem erfindungsgemäßen Modul alle Verlegespalte abgedeckt. An den Längsseiten erfolgt dies durch die Seitenfalz 11 und die Fläche 51; am oberen Ende durch die Bauteilverlängerung 12 sowie der Wandung 13 und am unteren Ende durch die Lippe 72. Ein Eidringen von Wasser in sie Unterkonstruktion des Dachs ist dadurch wirksam verhindert.

Insgesamt lässt sich mit dem erfindungsgemäßen Modul eine geneigte Dachfläche vollflächig begrünen. Gleichzeitig ist das mit dem erfindungsgemäßen Modul gedeckte Dach vollflächig gegen Eintreten von Wasser geschützt.

## Patentansprüche

1. Modul zur Begrünung von geneigten Dachflächen, bestehend aus einem Pflanzkasten (3), welcher eine Vegetationsschicht aufnimmt und der einen Boden (4), zwei Längswände (5), eine obere Stirnwand (6) und eine untere Stirnwand (7) aufweist, **dadurch gekennzeichnet, dass** mindestens eine Stauwand (8) zwischen der oberen Stirnwand (6) und der unteren Stirnwand (7) angeordnet ist, die sich zwischen den Längswänden (5) erstreckt.

2. Modul nach Anspruch 1, **dadurch gekennzeichnet, dass** die Stauwand (8) eine geringere Höhe hat als Längswände (5).

3. Modul nach Anspruch 1 oder 2, **dadurch gekennzeichnet, dass** die obere Stirnwand (6) mit Wassereinläufen (61) versehen ist.

4. Modul nach einem der vorhergehenden Ansprüche, **dadurch gekennzeichnet, dass** die obere Stirnwand (6) mit Staulöchern (62) versehen ist.

5. Modul nach einem der vorhergehenden Ansprüche, **dadurch gekennzeichnet, dass** die obere Stirnwand (6) an ihrem dem Boden (4) abgewandten Ende mindestens eine Freimachung (63) aufweist.

6. Modul nach Anspruch 5, **dadurch gekennzeichnet, dass** die Freimachung (63) eine halbkreisförmige Gestaltung hat.

7. Modul nach Anspruch 5 oder 6, **dadurch gekennzeichnet, dass** am Grund der Freimachung (63) ein Schlitz (64) ausgebildet ist.

8. Modul nach einem der vorhergehenden Ansprüche, **dadurch gekennzeichnet, dass** die untere Stirnwand (7) mit mindestens einem Überlauf (71) versehen ist.

9. Modul nach Anspruch 8, **dadurch gekennzeichnet, dass** der Überlauf (71) rohrförmig ausgebildet ist.

10. Modul nach einem der vorhergehenden Ansprüche, **dadurch gekennzeichnet, dass** der Boden (4) Teil eines Grundkörpers (1) ist.

11. Modul nach Anspruch 10, **dadurch gekennzeichnet, dass** der Grundkörper (1) mit einer Bauteilverlängerung (12) versehen ist.

12. Modul nach Anspruch 11, **dadurch gekennzeichnet, dass** am freien Ende der Bauteilverlängerung (12) eine Wandung (13) ausgebildet ist.

13. Modul nach einem der vorhergehenden Ansprüche, **dadurch gekennzeichnet, dass** auf dem Boden (4) mindestens zwei Vorsprünge (9) angeordnet sind, die im Wesentlichen rechtwinklig zum Boden (4) ausgerichtet sind,

14. Modul nach Anspruch 13, **dadurch gekennzeichnet, dass** die Vorsprünge (9) an ihrem dem Boden abgewandten Ende spitz zulaufen.

15. Modul nach Anspruch 13 oder 14, **dadurch gekennzeichnet, dass** die Vorsprünge (9) einen kreuzförmigen Querschnitt aufweisen.

16. Modul nach einem der vorhergehenden Ansprüche, **dadurch gekennzeichnet, dass** Grundkörper (1), Befestigung (2) und Pflanzkasten (3) als ein Bauteil aus Kunststoff hergestellt sind.

17. Modul nach Anspruch 16, **dadurch gekennzeichnet, dass** dem Kunststoff ein Flammschutzmittel beigemischt ist.

18. Modul nach einem der vorhergehenden Ansprüche, **dadurch gekennzeichnet, dass** an einer Längswand (5) an dem dem Boden (4) abgewandten freien Ende eine Fläche (51) ausgebildet ist, die seitlich über den Pflanzkasten (3) auskragt.

19. Modul nach einem der vorhergehenden Ansprüche, **dadurch gekennzeichnet, dass** die untere Stirnwand (7) an ihrem dem Boden (4) abgewandten Ende mit einer Lippe (72) versehen ist, die über den Pflanzkasten (3) hinausragt.

20. Modul nach einem der vorhergehenden Ansprüche, **dadurch gekennzeichnet, dass** Boden (4), der der Kontur und Geometrie einer herkömmlichen Dachpfanne bzw. Dachziegel folgt.

21. Modul nach einem der vorhergehenden Ansprüche, **dadurch gekennzeichnet, dass** die Stauwand (8) auf dem Boden (4) angeordnet ist.

22. Modul nach einem der vorhergehenden Ansprüche, **dadurch gekennzeichnet, dass** die Stauwand (8) die Längswände (5) miteinander verbindet.

23. Modul nach einem der vorhergehenden Ansprüche, **dadurch gekennzeichnet, dass** die Stauwand (8) im Wesentlichen parallel zur oberen Stirnwand (6) und unteren Stirnwand (7) erstrecken.

24. Modul nach einem der vorhergehenden Ansprüche, **dadurch gekennzeichnet, dass** sich die Stauwand (8) im Wesentlichen rechtwinklig zu den Längswänden (5) erstreckt.

25. Modul nach einem der vorhergehenden Ansprüche, **dadurch gekennzeichnet, dass** an einer Längsseite des Grundkörpers (1) eine Seitenfalz (11) ausgebildet ist, die über eine Längswand (5) des Pflanzkastens (3) vorragt.

26. Vollflächig gedeckte Dachfläche bestehend aus Modulen nach einem der Ansprüche 1 bis 25.
